# EUROPEAN PATENT APPLICATION

(11) **EP 4 628 354 A1**
(43) Date of publication of application: **08.10.2025**
(21) Application number: 22967211.8
(22) Date of filing: 01.12.2022
(51) Int. Cl.: B60L 58/13, B60L 58/26

(54) **METHOD FOR CONTROLLING ELECTRIC VEHICLE AND SYSTEM FOR CONTROLLING ELECTRIC VEHICLE**

(71) Applicant: Nissan Motor Co., Ltd., Kanagawa 221-0023 (JP)
(72) Inventor: YAMANOUCHI, Akira, Atsugi-shi, Kanagawa 243-0123 (JP)
(74) Representative: Hoefer & Partner Patentanwälte mbB
(86) International application number: PCT/JP2022/044425
(87) International publication number: WO 2024/116379

(57) **Abstract**

A method for controlling an electric vehicle, the electric vehicle performing power transfer between a drive motor and a battery and limiting charge/discharge power of the battery when a temperature of the battery exceeds a predetermined first upper limit temperature, the method including, predicting, from information on a road facing a charging point for charging the battery, that the vehicle travels from the charging point in which travel mode of low load travel in which the vehicle travels with a low load on the battery and high load travel in which the vehicle travels with a high load that is greater than the low load, when the travel mode is predicted to be the high load travel, setting an upper limit temperature of the battery during charging of the battery as the first upper limit temperature, and when the travel mode is predicted to be the low load travel, setting the upper limit temperature of the battery during charging of the battery as a second upper limit temperature that is higher than the first upper limit temperature and lower than a heat resistance temperature of the battery.

## Description

### TECHNICAL FIELD

The present invention relates to a method for controlling an electric vehicle and a system for controlling an electric vehicle.

### BACKGROUND ART

JP2019-160423A discloses contents of determining whether charging of a battery mounted on a vehicle is necessary, and controlling a temperature of the battery until a charger is connected to the vehicle when it is determined that the charging is necessary.

### SUMMARY OF INVENTION

When a battery is rapidly charged, a temperature of the battery tends to increase. In addition, when the temperature of the battery increases due to charging up to a point just before an output limitation is imposed, and immediately thereafter, for example, a sudden acceleration is performed, the temperature of the battery may further increase, causing the output limitation.

In order to avoid this, it is also conceivable to set an upper limit temperature of the battery during charging of the battery to be low. However, since there is a correlation between the temperature during charging and a state of charge of the battery, when the upper limit temperature is set to be low, the state of charge at the time of full charge of the battery is also set to be low. Thus, when the vehicle travels at a low acceleration or a low speed after the battery is charged, a temperature increase of the battery is suppressed, so that it is not necessary to set the upper limit temperature to be low during charging of the battery, and the state of charge of the battery at the time of full charge can also be set higher accordingly. However, the upper limit temperature of the battery during charging and the state of charge of the battery are set lower than necessary, which causes discomfort to a driver.

Therefore, an object of the present invention is to provide a method for controlling an electric vehicle and a system for controlling an electric vehicle capable of appropriately setting a state of charge of a battery at the time of full charge by controlling an upper limit temperature of the battery based on a travel state of the vehicle after the battery is charged.

In an aspect of the present invention, there is provided a method for controlling an electric vehicle, the electric vehicle performing power transfer between a drive motor and a battery and limiting charge/discharge power of the battery when a temperature of the battery exceeds a predetermined first upper limit temperature. The control method includes predicting, from information on a road facing a charging point for charging the battery, that the vehicle travels from the charging point in which travel mode of low load travel in which the vehicle travels with a low load on the battery and high load travel in which the vehicle travels with a high load that is greater than the low load. The control method further includes: when the travel mode is predicted to be the high load travel, setting an upper limit temperature as the battery during charging of the battery to the first upper limit temperature; and when the travel mode is predicted to be the low load travel, setting the upper limit temperature of the battery during charging of the battery as a second upper limit temperature that is higher than the first upper limit temperature and lower than a heat resistance temperature of the battery.

### BRIEF DESCRIPTION OF DRAWINGS

[FIG. 1] FIG. 1 is a block diagram illustrating a configuration of a vehicle to which a system for controlling an electric vehicle according to the present embodiment is applied.
[FIG. 2] FIG. 2 is a block diagram of the system for controlling an electric vehicle according to the present embodiment.
[FIG. 3] FIG. 3 illustrates a relationship between a temperature of a battery and input and output characteristics of the battery.
[FIG. 4] FIG. 4 illustrates a relationship between a state of charge (SOC) of the battery and input characteristics of the battery.
[FIG. 5] FIG. 5 is a flowchart of the system for controlling an electric vehicle according to the embodiment.
[FIG. 6] FIG. 6 is a time chart when the system for controlling an electric vehicle according to the present embodiment predicts that the vehicle is in high load travel (sudden acceleration start) after the battery is charged.
[FIG. 7] FIG. 7 is a time chart when the system for controlling an electric vehicle according to the present embodiment predicts that the vehicle is in low load travel (low acceleration start) after the battery is charged.

### DESCRIPTION OF EMBODIMENTS

### [Configuration of Vehicle 100]

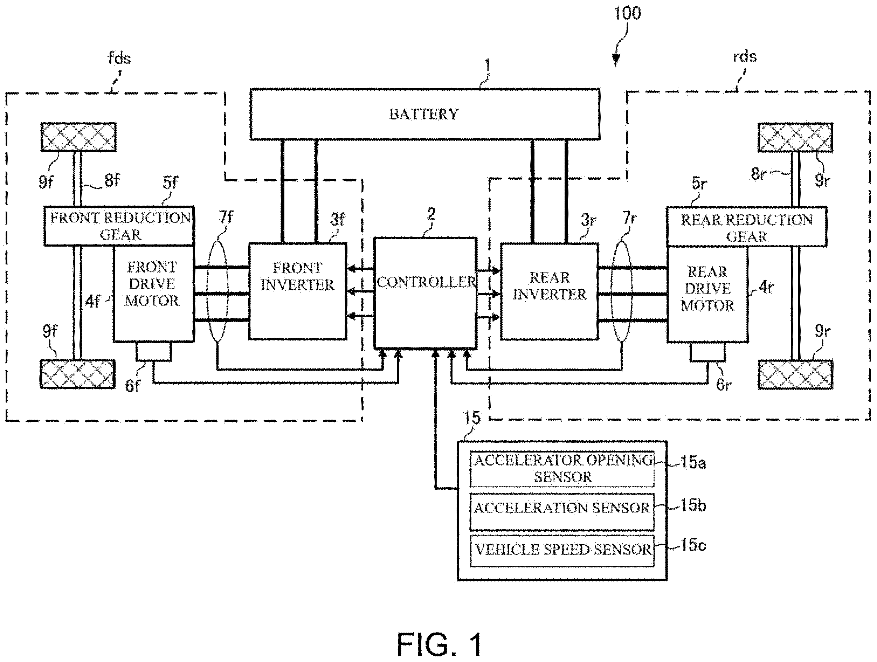

FIG. 1 is a block diagram illustrating a configuration of a vehicle 100 to which a system for controlling an electric vehicle according to the present embodiment is applied. The vehicle 100 is an electric vehicle. The electric vehicle refers to a vehicle that includes a drive motor (hereinafter, simply referred to as a motor 4) as a drive source and travels by generating a driving force due to a torque generated by the motor 4 on one or a plurality of wheels. For this reason, the electric vehicle includes not only an electric automobile but also a hybrid vehicle using both the motor 4 and an engine as the drive source. For example, the electric vehicle includes a hybrid vehicle in which the motor 4 is used as a drive source of one of a front wheel and a rear wheel and an engine is used as a drive source of the other. A four-wheel-drive vehicle refers to a vehicle that uses four wheels as drive wheels 9. The four-wheel-drive vehicle includes, in addition to a vehicle that normally uses four wheels as drive wheels 9, a vehicle that can be switched between a so-called two-wheel drive, which is front-wheel drive or rear-wheel drive, and four-wheel drive. In addition, in the four-wheel-drive vehicle, some of the four wheels can be controlled as drive wheels 9 in conjunction with each other, and the four wheels may be controlled as drive wheels 9 that drive independently. Therefore, the electric four-wheel-drive vehicle in the present embodiment refers to the vehicle 100 that travels by generating a driving force due to a torque generated by the motor 4 on some or all of the four wheels.

As illustrated in FIG. 1, the vehicle 100 is an electric four-wheel-drive vehicle, but may be an electric two-wheel-drive vehicle by only front-wheel drive or only rear-wheel drive. The vehicle 100 includes a front drive system fds, a rear drive system rds, a battery 1, and a controller 2 (control unit).

The front drive system fds receives power supplied from the battery 1 and drives front wheels 9f under the control of the controller 2. The front drive system fds includes a front inverter 3f, a front drive motor 4f, a front reduction gear 5f, a front rotation sensor 6f, a front drive shaft 8f, the front wheels 9f, and the like. The subscript f indicates a configuration on the front side. The front wheels 9f are a pair of wheels located relatively in a front direction of the vehicle 100 among the four wheels of the vehicle 100. The front direction of the vehicle 100 is a predetermined direction formally determined in accordance with a direction of a seat of a driver or the like. In the front drive system fds, the front wheels 9f function as the drive wheels 9 that generate a driving force of the vehicle 100.

The rear drive system rds receives power supplied from the battery 1 and drives rear wheels 9r under the control of the controller 2. The rear drive system rds includes a rear inverter 3r, a rear drive motor 4r, a rear reduction gear 5r, a rear rotation sensor 6r, a rear drive shaft 8r, and the rear wheels 9r, symmetrically arranged with respect to the front drive system fds. The subscript r indicates a configuration on the rear side. The rear wheels 9r are a pair of wheels located relatively in a rear direction of the vehicle 100 among the four wheels of the vehicle 100. The rear direction of the vehicle 100 refers to a direction opposite to the front direction of the vehicle 100. In the rear drive system rds, the rear wheels 9r function as the drive wheels 9 that generate a driving force of the vehicle 100.

The battery 1 is connected to the motor 4 via the inverter 3, and supplies drive power to the motor 4 by discharging. The battery 1 also can be charged by receiving regenerative power from the motor 4. In the front drive system fds, the battery 1 is connected to the front drive motor 4f via the front inverter 3f. Similarly, in the rear drive system rds, the battery 1 is connected to the rear drive motor 4r via the rear inverter 3r.

The controller 2 is a control device of the vehicle 100, and is a computer including a central processing unit (CPU), a read-only memory (ROM), a random access memory (RAM), an input/output interface (I/O interface), and the like. The controller 2 generates control signals for controlling the front drive motor 4f and the rear drive motor 4r based on vehicle variables of the vehicle 100. The vehicle variable is information indicating an operation state or a control state of the entire vehicle 100 or each unit constituting the vehicle 100, and can be obtained by detection, measurement, calculation, or the like. The vehicle variables include, for example, an accelerator opening APO, a longitudinal G and a lateral G, a vehicle speed V, a gradient value, a steering angle, a wheel speed, rotation speeds Nmf and Nmr of the motors 4f and 4r, three-phase alternating currents, which will be described later, and the like. The controller 2 controls the front drive motor 4f and the rear drive motor 4r using these vehicle variables.

The front inverter 3f and the rear inverter 3r convert a direct current supplied from the battery 1 into an alternating current by turning on/off switching elements according to a drive signal generated by the controller 2, and adjust currents supplied to the front drive motor 4f and the rear drive motor 4r, respectively. Each of the inverters 3f and 3r inversely converts alternating currents generated by the front drive motor 4f and the rear drive motor 4r into direct currents by a regenerative braking force, respectively, and adjusts the current supplied to the battery 1.

The front drive motor 4f and the rear drive motor 4r are, for example, three-phase AC motors, and generate a driving force (torque T) by the alternating current supplied from the inverter 3 connected thereto. The driving force generated by the front drive motor 4f is transmitted to the front wheels 9f via the front reduction gear 5f and the front drive shaft 8f. Similarly, the driving force generated by the rear drive motor 4r is transmitted to the rear wheels 9r via the rear reduction gear 5r and the rear drive shaft 8r. The front drive motor 4f and the rear drive motor 4r generate a regenerative braking force when being rotated along with the front wheels 9f and the rear wheels 9r, respectively, and recover kinetic energy of the vehicle 100 as electric energy. The front drive motor 4f constitutes a drive source (front drive source) that drives the front wheels 9f. Similarly, the rear drive motor 4r constitutes a drive source (rear drive source) that drives the rear wheels 9r independently of the front wheels 9f.

Each of the front reduction gear 5f and the rear reduction gear 5r includes, for example, a plurality of gears. Each of the reduction gears 5f and 5r reduces the rotation speed Nm of the motor 4 connected thereto and transmits the reduced rotation speed Nm to the drive shaft 8, thereby generating a driving torque or a braking torque proportional to a reduction ratio. Each of the front rotation sensor 6f and the rear rotation sensor 6r detects a rotor phase of the motor 4 connected thereto, and outputs the detected rotor phase to the controller 2. The controller 2 detects the rotation speed Nmf of the front drive motor 4f based on the output of the front rotation sensor 6f, and detects the rotation speed Nmr of the rear drive motor 4r based on the output of the rear rotation sensor 6r. Each of a front current sensor 7f and a rear current sensor 7r detects a current flowing through the motor 4 connected thereto, and outputs the detected current to the controller 2. In the present embodiment, the current sensors 7f and 7r detect three-phase alternating currents of the motors 4f and 4r, respectively.

The vehicle 100 includes various sensors 15 in addition to the front rotation sensor 6f, the front current sensor 7f, the rear rotation sensor 6r, and the rear current sensor 7r described above. The various sensors 15 include, for example, an accelerator opening sensor 15a, an acceleration sensor 15b, a vehicle speed sensor 15c, a gradient sensor, a steering angle sensor, a wheel speed sensor, and the like. The accelerator opening sensor 15a detects the accelerator opening APO which is an accelerator operation amount. The acceleration sensor 15b detects accelerations in a longitudinal direction and a lateral direction of the vehicle 100, that is, the longitudinal G and the lateral G. The vehicle speed sensor 15c detects the vehicle speed V of the vehicle 100. The vehicle speed V is a moving speed of the entire vehicle body of the vehicle 100, that is, a vehicle body speed. The gradient sensor detects a gradient value which is a traveling road gradient of the vehicle 100. The steering angle sensor detects a steering angle of a steering wheel. The wheel speed sensor detects a wheel speed of each drive wheel 9. Detection values detected by the various sensors 15 are input to the controller 2.

In the vehicle 100, a target driving torque T_req, which is a required torque by a driver, is distributed to the front wheels 9f and the rear wheels 9r. Therefore, when one of a front torque distribution value RTf which is a torque distribution value RT of the front wheels 9f and a rear torque distribution value RTr which is a torque distribution value RT of the rear wheels 9r is determined, the other is also determined, and as a result, the torque distribution of the front and rear wheels 9f and 9r is also determined. For this reason, the vehicle 100 calculates a rear torque Tr, which is the torque T of the rear drive motor 4r, based on a driving state represented by a first parameter such as the longitudinal G as described later. Thus, the rear torque distribution value RTr can be calculated, and the torque distribution control of the front and rear wheels 9f and 9r is performed by substantially calculating the rear torque distribution value RTr.

### [Configuration of Control System]

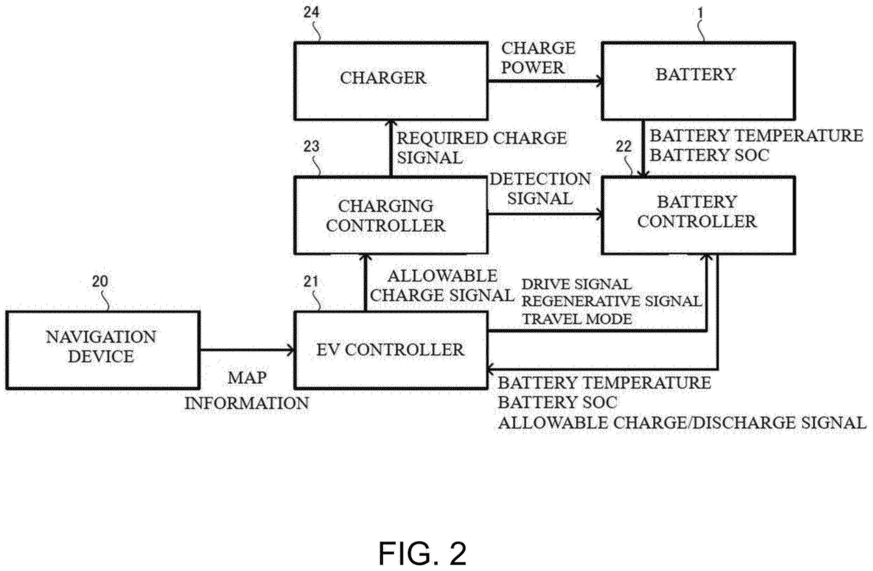

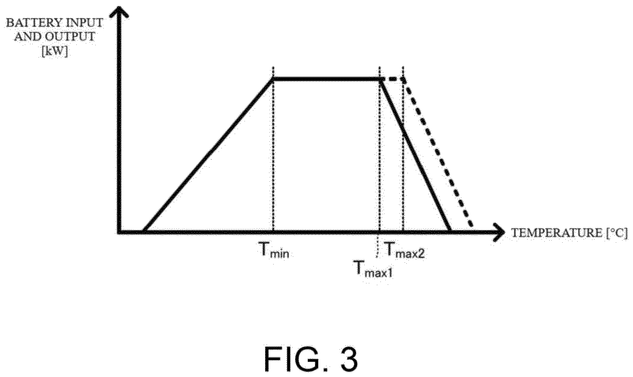

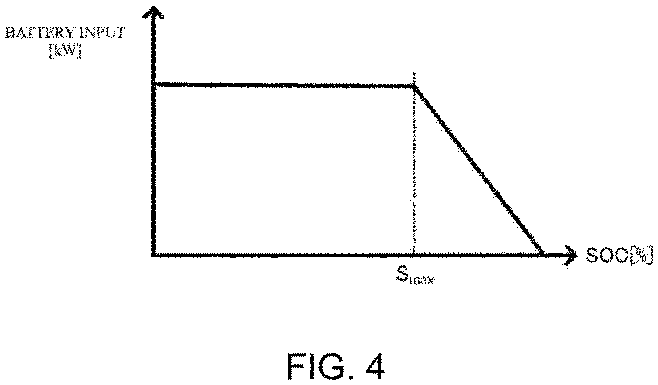

FIG. 2 is a block diagram of the system for controlling an electric vehicle according to the present embodiment. FIG. 3 illustrates a relationship between a temperature of the battery 1 and input and output characteristics of the battery 1. FIG. 4 illustrates a relationship between a state of charge (SOC) of the battery 1 and input characteristics of the battery 1.

The system for controlling an electric vehicle according to the present embodiment includes a navigation device 20, an EV controller 21, a battery controller 22, a charging controller 23, and a charger 24.

The navigation device 20 generates map information including information on a travel route from a current location (or a departure location) to a destination (or a via-point) of the vehicle 100, and outputs the map information to the EV controller 21. Information on the current location (departure location) of the vehicle 100 is acquired by, for example, a global positioning system (GPS), and is obtained by matching the current location with a road on the map information of the navigation device 20. The information on the destination is obtained by specifying a destination on the map information by an input operation of the driver. Here, the destination is, for example, a final point of navigation, and is a location where an entire vehicle system stops. Information on the travel route is obtained by the navigation device 20 selecting a route connecting the current location (departure location) and the destination in the map information. The map information (information on the travel route) includes information on a distance to a destination, information on a location of a road constituting the travel route, information on a gradient of the road, information on an altitude difference, a charging point (location and charger output), and the like. In addition, the map information includes information on a road facing (adjacent to) the charging point, and the information on the road includes information on an attribute (general road and highway), information on a predicted vehicle speed (legal speed limit and statistical average vehicle speed), information on a road gradient, and the like.

The charger 24 is disposed in a service area of a highway, a parking lot facing a general road, or the like. When a driver inserts a charging plug attached to the charger 24 into a charging socket disposed in the vehicle 100, the battery 1 can be charged.

The charging controller 23 is electrically connected to the socket. Thus, when the charging plug is inserted into the socket, the charging controller 23 detects the charging plug and outputs this as a detection signal to the battery controller 22.

The charging controller 23 outputs an allowable charge signal input from the EV controller 21 to the charger 24 as a required charge signal. Here, the allowable charge signal (required charge signal) is a signal for setting charging power (input) supplied from the charger 24 to the battery 1. The charger 24 outputs the charging power to the battery 1 based on the required charge signal input from the charging controller 23.

The battery controller 22 includes the front inverter 3f and the rear inverter 3r, and controls power transfer between the battery 1 and the motor 4. When a drive signal is input from the EV controller 21, the battery controller 22 extracts drive power corresponding to the drive signal from the battery 1 and outputs the drive power to the motor 4. When a regenerative signal is input from the EV controller 21, the battery controller 22 extracts regenerative power corresponding to the regenerative signal from the motor 4 and supplies the regenerative power to the battery 1.

When the detection signal is input from the charging controller 23, the battery controller 22 outputs information on the temperature of the battery 1 and information on the state of charge (SOC) of the battery 1 to the EV controller 21.

The battery controller 22 monitors the temperature of the battery 1. In a case where a travel mode (high load travel) to be described later is input from the EV controller 21, the battery controller 22 limits allowable charge/discharge power [kW] of the battery 1 when the temperature of the battery 1 is higher than a first upper limit temperature (Tₘₐₓ₁, a temperature lower than a heat resistance temperature), and outputs an allowable charge/discharge signal reflecting the allowable charge/discharge power to the EV controller 21. Here, the heat resistance temperature refers to an upper limit temperature at which the battery 1 can operate without being subjected to irreversible thermal damage.

In a case where a travel mode (low load travel) to be described later is input from the EV controller 21, the battery controller 22 limits the allowable charge/discharge power [kW] of the battery 1 when the temperature of the battery 1 is higher than a second upper limit temperature (Tₘₐₓ₂, a temperature lower than the heat resistance temperature) higher than the first upper limit temperature, and outputs the allowable charge/discharge signal reflecting the allowable charge/discharge power to the EV controller 21.

When the temperature of the battery 1 is lower than a lower limit temperature (Tₘᵢₙ, a lower limit temperature at which charge/discharge capability of the battery 1 does not decrease), the battery controller 22 limits the allowable charge/discharge power of the battery 1, and outputs the allowable charge/discharge signal reflecting the allowable charge/discharge power to the EV controller 21.

In addition, in FIG. 3, a magnitude of the allowable charge/discharge power (allowable input/output) between the second upper limit temperature (Tₘₐₓ₂) and the lower limit temperature (Tₘᵢₙ) corresponds to an output of the battery 1 during high load travel to be described later. In FIG. 3, an input characteristic and an output characteristic of the battery 1 are the same, but the battery 1 may have different characteristics.

The battery controller 22 monitors the state of charge (SOC) of the battery 1. As illustrated in FIG. 4, when the state of charge (SOC) of the battery 1 is higher than a predetermined upper limit value (Sₘₐₓ: for example, 90 [%]), the battery controller 22 limits the allowable charge/discharge power [kW] of the battery 1, and outputs the allowable charge/discharge signal reflecting the allowable charge/discharge power to the EV controller 21.

The EV controller 21 includes the controller 2. The EV controller 21 receives map information including information on a travel route from a current location (or a departure location) to a destination from the navigation device 20, predicts a travel mode (low load travel or high load travel) of the vehicle 100 starting from the charging point based on the map information, and outputs information on the travel mode to the battery controller 22.

The low load travel refers to, for example, a travel state in which an acceleration at the time of start of the vehicle 100 is low and a speed when the vehicle 100 is traveling at a substantially constant speed is also low (for example, less than 80 km/s).

When the charging point is, for example, in a parking lot facing a general road and the destination is close to the parking lot (for example, 2 to 3 [km]), it is predicted that the vehicle arrives at the destination in a state in which an accelerator pedal depression amount on the general road by the driver is small, that is, the acceleration and the speed are low, and the load on the battery 1 is also small. Such a case is predicted as the low load travel. The acceleration appears when the vehicle 100 starts to travel on the general road, but becomes substantially zero when the vehicle speed becomes substantially constant. Therefore, it can be predicted that a low acceleration start is performed in an initial stage of the low load travel.

In addition, even in a case where the destination is far from the charging point, when the speed limit of the general road facing the charging point is set to be low, it can be predicted that the driver drives the vehicle 100 with the low load travel and the low acceleration start.

The high load travel (high speed travel) refers to, for example, a travel state in which the acceleration at the time of start of the vehicle 100 is high and the speed when the vehicle 100 is traveling at a substantially constant speed is also high (for example, 80 [km/s] or more).

For example, when the charging point is disposed in the service area of the highway, the driver merges onto the highway after the battery 1 is charged, and thus it is predicted that the driver increases the accelerator pedal depression amount to reach the high speed driving before the driver merges onto the highway. In this case, the acceleration and the speed are high, and the load on the battery 1 is large. Such a case is predicted as the high load travel. In addition, the acceleration is in a high state until the vehicle merges onto the highway at least. Therefore, it can be predicted that a sudden acceleration start is performed in the initial stage of the low load travel, that is, from the charging point in the service area to a highway merging point.

When the road facing the charging point has a predetermined uphill gradient and continues for a predetermined distance (for example, 1 kilometer), the accelerator pedal depression amount is large, and a high torque is required for the motor 4. At this time, the EV controller 21 determines that a high load is required for the battery 1, and predicts the high load travel (high torque travel) as the travel mode on the road.

As described above, the EV controller 21 estimates information on the low load travel (information on the low acceleration start) and information on the high load travel (information on the sudden acceleration start) from the map information, and stores this past information.

Thus, the EV controller 21 may determine whether there is past information (map information including the same information) of the map information (information on the predicted vehicle speed on the road facing the charging point, or the like) currently input from the navigation device 20, and when there is past information, may extract the information on the low load travel (information on the low acceleration start) and the information on the high load travel (information on the sudden acceleration start) associated with the past information and execute control to be described later. Accordingly, a processing load of the EV controller 21 can be reduced.

The EV controller 21 may be configured to extract past map information having common information on the predicted vehicle speed on the road facing the charging point with the current map information, compare the number of pieces of information on the low load travel (low acceleration start) and the number of pieces of information on the high load travel (sudden acceleration start) included in the past map information, and set one having a larger number of pieces of information to the travel mode. This enables control reflecting a driving style of the driver.

Incidentally, there are cases where it is known that the travel route from the current location (or the departure location) to the destination of the vehicle 100 is a monotonous terrain, and it is known that the load (input and output) on the battery 1 is substantially constant. In this case, it is also preferable that the EV controller 21 predicts either the low load travel (low acceleration start) or the high load travel (sudden acceleration start) as the travel mode based on an average of the load on the battery 1 from the departure location to the charging point. Accordingly, the processing load on the EV controller 21 can be reduced.

The EV controller 21 generates an allowable charge signal based on the information on the temperature of the battery 1 and the information on the state of charge (SOC) of the battery 1, and outputs the allowable charge signal to the charging controller 43.

At this time, when the EV controller 21 predicts the travel mode to be the high load travel (high acceleration start) during charging of the battery 1 of the vehicle 100, the EV controller 21 sets an upper limit value of allowable charge power related to the allowable charge signal based on the allowable charge/discharge signal (signal for limiting the allowable charge/discharge power at the first upper limit temperature (Tₘₐₓ₁) or higher) input from the battery controller 22.

When the EV controller 21 predicts the travel mode to be the low load travel (low acceleration start) during charging of the battery 1 of the vehicle 100, the EV controller 21 sets the upper limit value of the allowable charge power related to the allowable charge signal based on the allowable charge/discharge signal (signal for limiting the allowable charge/discharge power at the second upper limit temperature (Tₘₐₓ₂) or higher) input from the battery controller 22.

### [Control Flow]

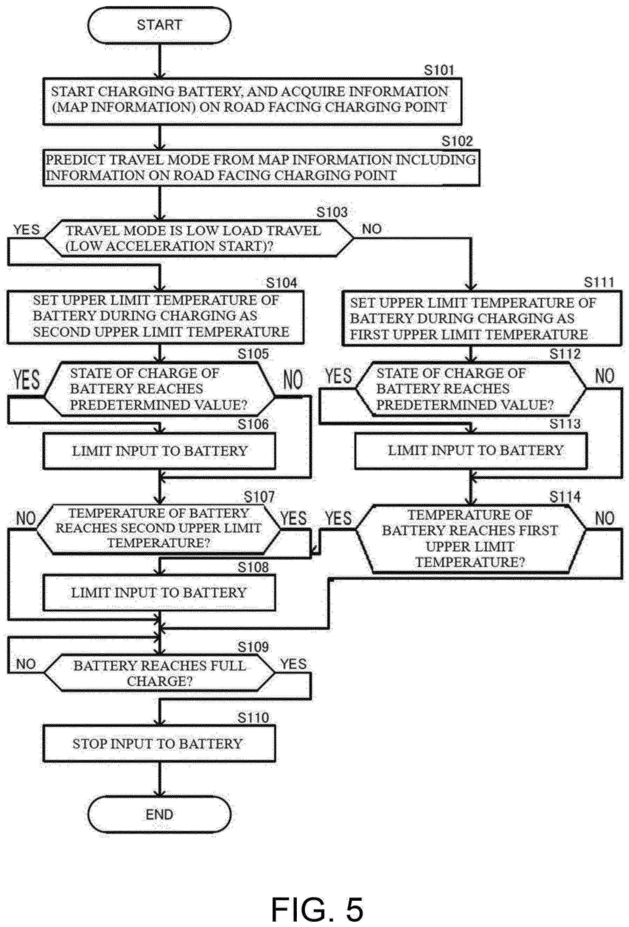

FIG. 5 is a flowchart of the system for controlling an electric vehicle according to the embodiment.

In an initial state, the vehicle 100 arrives at the charging point, the charging plug of the charger 24 is inserted into the charging socket of the vehicle 100, and the battery controller 22 receives the detection signal, thereby transmitting the information on the temperature of the battery 1 and the information on the state of charge (SOC) of the battery 1 to the EV controller 21.

In step S101, the EV controller 21 outputs an allowable charge signal to the charging controller 23. In response to this, the charging controller 23 outputs a required power generation signal to the charger 24, and the charger 24 supplies charge power to the battery 1 based on the required charge signal (allowable charge signal), thereby starting charging the battery 1.

In step S102, the EV controller 21 predicts the travel mode when the vehicle 100 travels from the charging point from the map information including information on the road facing the charging point (information on the predicted vehicle speed and information on the gradient) from the navigation device 20.

In step S103, the EV controller 21 determines whether the travel mode is the low load travel (low acceleration start), and the process proceeds to step S104 if YES, and proceeds to step S112 on the assumption that the travel mode is the high load travel (sudden acceleration start) if NO.

In step S104, the EV controller 21 sets the upper limit temperature during charging of the battery 1 as the second upper limit temperature (Tₘₐₓ₂).

In step S105, the EV controller 21 determines whether the state of charge of the battery 1 has reached a predetermined value (for example, 50 [%]), and the process proceeds to step S106 if YES and proceeds to step S107 if NO.

In step S106, the EV controller 21 (battery controller 22) limits an input (charge power) to the battery 1 according to the map of FIG. 4.

In step S107, the EV controller 21 determines whether the temperature of the battery 1 has reached the second upper limit temperature (Tₘₐₓ₂), and the process proceeds to step S108 if YES and proceeds to step S109 if NO.

In step S108, the EV controller 21 limits the input (charge power) to the battery 1 according to the map of FIG. 3. When the input (charge power) to the battery 1 is limited in step S106 (or step S113), the input (charge power) to the battery 1 is further limited in step S108.

In step S109, the EV controller 21 determines whether the battery 1 has reached full charge, and the process proceeds to step S110 if YES and remains in step S109 if NO. Here, the full charge refers to a case where the state of charge of the battery 1 reaches a predetermined upper limit (for example, 90 [%]) or that a predetermined time has elapsed from the start of charging.

In step S110, the EV controller 21 stops the input (charging) to the battery 1.

In step S111, the EV controller 21 sets the upper limit temperature during charging of the battery 1 as the first upper limit temperature (Tₘₐₓ₁).

In step S112, the EV controller 21 determines whether the state of charge of the battery 1 has reached a predetermined value (for example, 50 [%]), and the process proceeds to step S113 if YES and proceeds to step S114 if NO.

In step S113, the EV controller 21 (battery controller 22) limits the input (charge power) to the battery 1 according to the map of FIG. 4.

In step S114, the EV controller 21 determines whether the temperature of the battery 1 has reached the first upper limit temperature (Tₘₐₓ₁), and the process proceeds to step S108 if YES and proceeds to step S109 if NO.

### [First Time Chart]

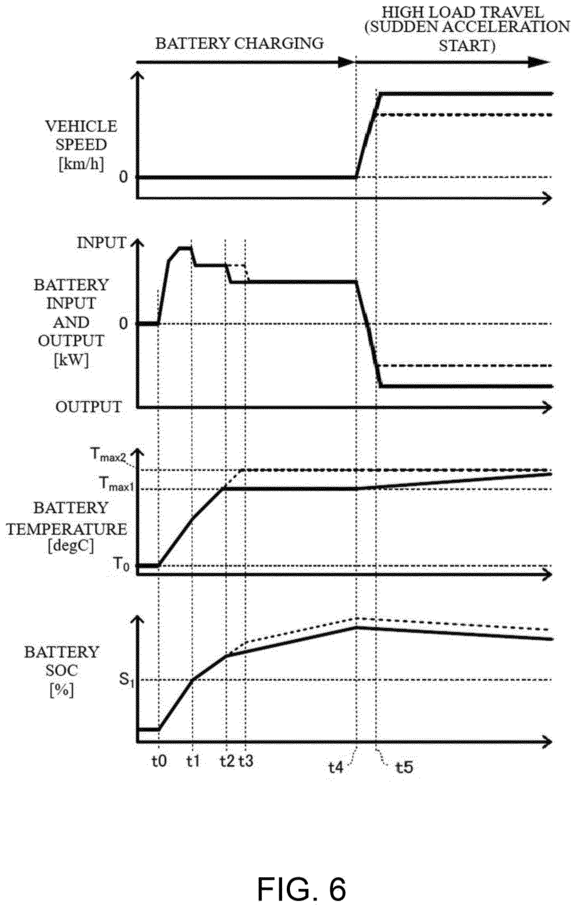

FIG. 6 is a time chart when the system for controlling an electric vehicle according to the present embodiment predicts that the vehicle 100 is in high load travel (sudden acceleration start) after the battery 1 is charged. FIG. 6 compares a time chart (solid line) when the upper limit temperature of the battery 1 during charging is set as the first upper limit temperature (Tₘₐₓ₁) (step S111 in FIG. 5) and a time chart (dashed line) when the upper limit temperature of the battery 1 during charging is set as the second upper limit temperature (Tₘₐₓ₂) in a case where it is predicted that the vehicle 100 is in the high load travel (sudden acceleration start) after charging.

When the EV controller 21 (battery controller 22) starts charging the battery 1 at time t0, the input (charge power) to the battery 1, the temperature of the battery 1, and the state of charge (SOC) of the battery 1 increase. In addition, the EV controller 21 predicts that the travel mode of the vehicle 100 is the high load travel (sudden acceleration start) after the battery 1 is charged, from the information on the road facing the charging point or the like.

At time t1, when the state of charge of the battery 1 reaches a predetermined value S₁ (for example, 50 [%]), the input to the battery 1 is limited. Accordingly, after time t1, a rate (slope) of increase in the temperature of battery 1 and a rate (slope) of increase in the state of charge of the battery 1 decrease.

In a case where the upper limit temperature of the battery 1 during charging is set as the first upper limit temperature (Tₘₐₓ₁), at time t2, when the temperature of the battery 1 reaches the first upper limit temperature (Tₘₐₓ₁), the input (charge power) to the battery 1 is limited based on the map (solid line) illustrated in FIG. 3. Accordingly, after time t1, the input (solid line) to the battery 1 further decreases, and the rate (slope) of increase in the state of charge (solid line) of the battery 1 further decreases.

At time t4, the battery 1 reaches the full charge, and thus charging of the battery 1 is completed, and the vehicle 100 is in the high load travel (sudden acceleration start). At this time, the temperature of the battery 1 is the first upper limit temperature (Tₘₐₓ₁) lower than the second upper limit temperature (Tₘₐₓ₂), and the battery 1 can provide an output (solid line) and a vehicle speed (solid line) required by the driver without the input and output of the battery 1 being limited by the temperature.

On the other hand, when the upper limit temperature of the battery 1 during charging is set as the second upper limit temperature (Tₘₐₓ₂), the input to the battery 1 is not limited at time t2, and after time t2, the temperature of the battery 1 reaches the second upper limit temperature (Tₘₐₓ₂) at time t3, thereby limiting the input (charge power) to the battery 1 based on the map (dashed line) illustrated in FIG. 3. Accordingly, after time t3, the input (dashed line) to the battery 1 decreases, and the rate (slope) of increase in the state of charge (dashed line) of the battery 1 also decreases.

At time t4, the charging of the battery 1 is completed, and the vehicle 100 is in the high load travel (sudden acceleration start). At this time, the temperature of the battery 1 has reached the second upper limit temperature (Tₘₐₓ₂). Therefore, after time t5, the output (dashed line) of the battery 1 is limited according to the map (dashed line) of FIG. 3, the battery 1 cannot provide the output (solid line) required by the driver, and thus the vehicle speed (dashed line) is lower than the vehicle speed (solid line).

### [Second Time Chart]

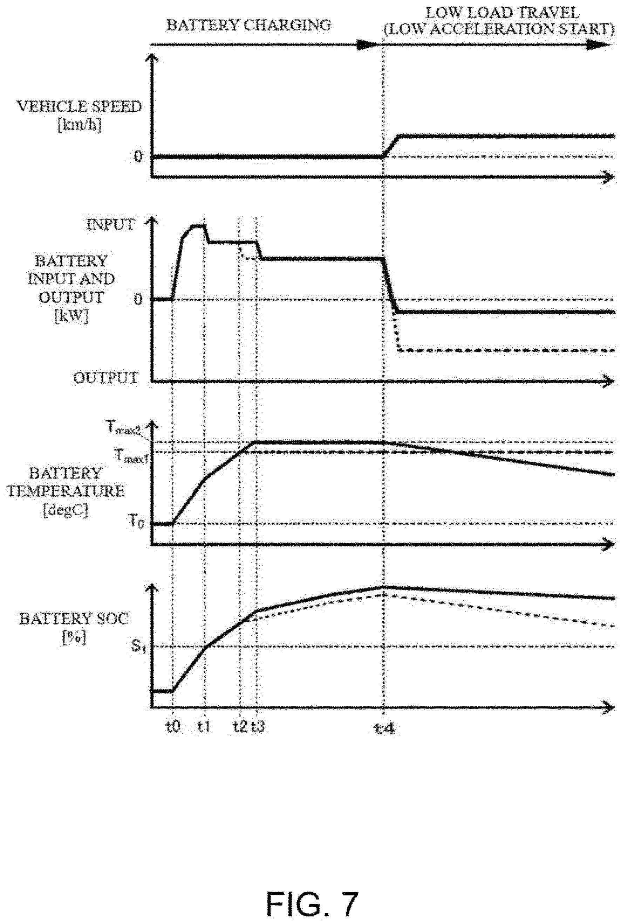

FIG. 7 is a time chart when the system for controlling an electric vehicle according to the present embodiment predicts that the vehicle 100 is in low load travel (low acceleration start) after the battery 1 is charged.

FIG. 7 compares a time chart (solid line) when the upper limit temperature of the battery 1 during charging is set as the second upper limit temperature (Tₘₐₓ₂) (step S104 in FIG. 5) and a time chart (dashed line) when the upper limit temperature of the battery 1 during charging is set as the first upper limit temperature (Tₘₐₓ₁) in a case where it is predicted that the vehicle 100 is in the low load travel (low acceleration start) after charging.

When the EV controller 21 (battery controller 22) starts charging the battery 1 at time t0, the input to the battery 1, the temperature of the battery 1, and the state of charge (SOC) of the battery 1 increase. In addition, the EV controller 21 predicts that the travel mode of the vehicle 100 is the low load travel (low acceleration start) after the battery 1 is charged, from the information on the road facing the charging point or the like.

At time t1, when the state of charge of the battery 1 reaches the predetermined value S₁ (for example, 50 [%]), the input to the battery 1 is limited. Accordingly, after time t1, the rate (slope) of increase in the temperature of battery 1 and the rate (slope) of increase in the state of charge of the battery 1 decrease.

In a case where the upper limit temperature of the battery 1 during charging is set as the first upper limit temperature (Tₘₐₓ₁), at time t2, when the temperature of the battery 1 reaches the first upper limit temperature (Tₘₐₓ₁), the input (charge power) to the battery 1 is limited based on the map (solid line) illustrated in FIG. 3. Accordingly, after time t2, the input (dashed line) to the battery 1 further decreases, and the rate (slope) of increase in the state of charge (dashed line) of the battery 1 further decreases.

At time t4, the SOC of the battery 1 reaches the state of charge at the time of full charge, and thus the charging of the battery 1 is completed, and the vehicle 100 is in the low load travel (low acceleration start). However, since the load on the battery 1 is a low load, the temperature of the battery 1 does not increase thereafter and decreases monotonically. Here, there is a correlation between the temperature of the battery 1 during charging and the state of charge of the battery 1. Thus, in the vehicle 100 predicted to travel at a low load, when the first upper limit temperature (Tₘₐₓ₁) lower than the second upper limit temperature (Tₘₐₓ₂) is set as the upper limit temperature of the battery 1 during charging, the vehicle 100 reaches the full charge at a state of charge lower than the state of charge expected by the driver, causing discomfort to the driver.

On the other hand, in a case where the upper limit temperature of the battery 1 during charging is set as the second upper limit temperature (Tₘₐₓ₂), when the temperature of the battery 1 reaches the second upper limit temperature (Tₘₐₓ₂) at time t3 after time t2, the input (charge power) to the battery 1 is limited based on the map (dashed line) in FIG. 3. Accordingly, after time t3, the input (solid line) to the battery 1 further decreases, and the rate (slope) of increase in the state of charge (solid line) of the battery 1 further decreases.

At time t4, the charging of the battery 1 is completed, but the state of charge (solid line) at this time becomes a value higher than the state of charge (dashed line) obtained by setting an upper limit temperature of the battery 1 during charging as a first upper limit temperature (Tₘₐₓ₁), and the state of charge expected by the driver can be secured.

### [Effects of Present Embodiment]

In a method for controlling an electric vehicle according to the present embodiment, the electric vehicle performing power transfer between a drive motor (motor 4) and the battery 1 and limiting charge/discharge power of the battery 1 when a temperature of the battery 1 of the vehicle 100 during traveling exceeds a predetermined first upper limit temperature (Tₘₐₓ₁), the method including: predicting, from information on a road facing a charging point for charging the battery 1, that the vehicle 100 travels from the charging point in which travel mode of low load travel in which the vehicle 100 travels with a low load on the battery 1 and high load travel in which the vehicle 100 travels with a high load that is greater than the low load; when the travel mode is predicted to be the high load travel, setting an upper limit temperature of the battery 1 during charging of the battery 1 as the first upper limit temperature (Tₘₐₓ₁); and when the travel mode is predicted to be the low load travel, setting the upper limit temperature of the battery 1 during charging of the battery 1 as a second upper limit temperature (Tₘₐₓ₂) that is higher than the first upper limit temperature (Tₘₐₓ₁) and lower than a heat resistance temperature of the battery 1.

According to the above method, when the travel mode after charging of the battery 1 is the high load travel, the battery 1 can provide the output expected by the driver after charging by setting the upper limit temperature of the battery 1 during charging as the first upper limit temperature (Tₘₐₓ₁). When the travel mode after charging of the battery 1 is the low load travel, the state of charge (SOC) of the battery 1 expected by the driver after charging can be obtained by setting the upper limit temperature of the battery 1 during charging as the second upper limit temperature (Tₘₐₓ₂).

In the present embodiment, information on the low load travel, information on the high load travel, and information on the charging point are estimated from map information representing the road.

According to the above method, the information on the low load travel, the information on the high load travel, and the information on the charging point can be easily estimated from the map information.

In the present embodiment, information on the charging point is estimated from map information representing the road, and past information on the low load travel or past information on the high load travel calculated using past map information in which the information on the charging point is the same as in the map information is set to the travel mode.

According to the above method, it is possible to estimate the charging point easily and with high accuracy, and it is possible to reduce the processing load (of the EV controller 21) by extracting the information on the low load travel or the information on the high load travel in the past information and setting this information to the travel mode.

In the present embodiment, information on the low load travel and information on the high load travel are estimated based on the load from a departure location of the vehicle 100 to the charging point.

According to the above method, when it is known that the state of the road from the departure location of the vehicle 100 to the charging point and the state of the road facing the charging point are monotonic, it is possible to easily estimate the low load travel and the high load travel without using the map information.

In the present embodiment, information on the charging point is estimated from map information representing the road, the map information includes information on a predicted vehicle speed on the road facing the charging point, and past map information having common information on the predicted vehicle speed on the road is extracted, the number of pieces of information on the low load travel and the number of pieces of information on the high load travel included in the past map information are compared, and one having a larger number of pieces of information is set to the travel mode.

According to the above method, the travel mode can be set in accordance with the driving style of the driver.

In the present embodiment, information on the charging point is estimated from map information representing the road, the map information includes information on a predicted vehicle speed on the road, and when the predicted vehicle speed on the road is equal to or greater than a predetermined speed, the high load travel is predicted as the travel mode.

According to the above method, the high load travel can be predicted as the travel mode with high accuracy from the map information.

In the present embodiment, information on the charging point is estimated from map information representing the road, the map information includes information on a gradient of the road facing the charging point, and when the road facing the charging point has a predetermined uphill gradient and the road continues for a predetermined distance in the map information, the high load travel is predicted as the travel mode.

According to the above method, the high load travel can be predicted as the travel mode with high accuracy from the map information.

In the present embodiment, when the vehicle 100 accelerates in a short time after departing from the charging point and travels at a substantially constant speed, information on the low load travel includes information on a low acceleration start indicating that the vehicle 100 starts from the charging point at a low speed at a start of travel, information on the high load travel includes information on sudden acceleration start indicating that the vehicle 100 starts from the charging point at a sudden acceleration at the start of the travel, either the low acceleration start or the sudden acceleration start is selected as the travel mode, when the travel mode is predicted to be the sudden acceleration start, the upper limit temperature of the battery 1 during charging of the battery 1 is set as the first upper limit temperature (Tₘₐₓ₁), and when the travel mode is predicted to be the low acceleration start, the upper limit temperature of the battery 1 during charging of the battery 1 is set as the second upper limit temperature(Tₘₐₓ₂).

According to the above method, when the travel mode after charging of the battery 1 is the sudden acceleration start, the battery 1 can provide the output expected by the driver after charging by setting the upper limit temperature of the battery 1 during charging as the first upper limit temperature (Tₘₐₓ₁). When the travel mode after charging of the battery 1 is the low acceleration start, the state of charge of the battery 1 at the time of full charge expected by the driver can be obtained by setting the upper limit temperature of the battery 1 during charging as the second upper limit temperature (Tₘₐₓ₂).

In the present embodiment, information on the charging point is estimated from map information representing the road, and past information on the low acceleration start or past information on the sudden acceleration start calculated using past map information in which the information on the charging point is the same as in the map information is set to the travel mode.

According to the above method, it is possible to estimate the charging point easily and with high accuracy, and it is possible to reduce the processing load (of the EV controller 21) by extracting the information on the low acceleration start or the information on the sudden acceleration start in the past information and setting this information to the travel mode.

In the present embodiment, the information on the low acceleration start and the information on the sudden acceleration start are estimated based on the load from a departure location of the vehicle 100 to the charging point.

According to the above method, when it is known that the state of the road from the departure location of the vehicle 100 to the charging point and the state of the road facing the charging point are monotonic, it is possible to easily estimate the information on the low acceleration start and the information on the sudden acceleration start without using the map information.

In the present embodiment, information on the charging point is estimated from map information representing the road, the map information includes information on a predicted vehicle speed on the road facing the charging point, and past map information having common information on the predicted vehicle speed on the road is extracted, the number of pieces of information on the low acceleration start and the number of pieces of information on the sudden acceleration start included in the past map information are compared, and one having a larger number of pieces of information is set to the travel mode.

According to the above method, the travel mode can be set in accordance with the driving style of the driver.

In the present embodiment, information on the charging point is estimated from map information representing the road, the map information includes information on a predicted vehicle speed on the road, and when the predicted vehicle speed is equal to or greater than a predetermined speed in the map information, the sudden acceleration start is predicted as the travel mode.

According to the above method, the sudden acceleration start can be predicted as the travel mode with high accuracy from the map information.

In a system for controlling an electric vehicle according to the embodiment, the electric vehicle including a drive motor (motor 4), the battery 1 configured to perform power transfer with the drive motor (motor 4), and a control unit (EV controller 21) configured to limit charge / discharge power (input/output) of the battery 1 when a temperature of the battery 1 exceeds a predetermined first upper limit temperature (Tₘₐₓ₁), in which the control unit (EV controller 21) is configured to predict, from information on a road facing a charging point for charging the battery 1, that the vehicle 100 travels from the charging point in which travel mode of low load travel in which the vehicle 100 travels with a low load on the battery 1 and high load travel in which the vehicle 100 travels with a high load that is greater than the low load, when the travel mode is predicted to be the high load travel, set an upper limit temperature of the battery 1 during charging of the battery 1 as the first upper limit temperature (Tₘₐₓ₁), and when the travel mode is predicted to be the low load travel, set the upper limit temperature of the battery 1 during charging of the battery 1 as a second upper limit temperature (Tₘₐₓ₂) that is higher than the first upper limit temperature (Tₘₐₓ₁) and lower than a heat resistance temperature of the battery 1.

With the above configuration, when the travel mode after charging of the battery 1 is the high load travel, the battery 1 can provide the output expected by the driver after charging by setting the upper limit temperature of the battery 1 during charging as the first upper limit temperature (Tₘₐₓ₁). When the travel mode after charging of the battery 1 is the low load travel, the state of charge of the battery 1 at the time of full charge expected by the driver can be obtained by setting the upper limit temperature of the battery 1 during charging as the second upper limit temperature (Tₘₐₓ₂).

Although the embodiments of the present invention have been described above, the above embodiments merely exemplify a part of application examples of the present invention and do not intend to limit the technical scope of the present invention to the specific configurations of the above embodiments. The above embodiments can be combined as appropriate.

## Claims

1. A method for controlling an electric vehicle, the electric vehicle performing power transfer between a drive motor and a battery and limiting charge/discharge power of the battery when a temperature of the battery exceeds a predetermined first upper limit temperature, the method comprising:
predicting, from information on a road facing a charging point for charging the battery, that the vehicle travels from the charging point in which travel mode of low load travel in which the vehicle travels with a low load on the battery and high load travel in which the vehicle travels with a high load that is greater than the low load;
when the travel mode is predicted to be the high load travel, setting an upper limit temperature of the battery during charging of the battery as the first upper limit temperature; and
when the travel mode is predicted to be the low load travel, setting the upper limit temperature of the battery during charging of the battery as a second upper limit temperature that is higher than the first upper limit temperature and lower than a heat resistance temperature of the battery.

2. The method for controlling an electric vehicle according to claim 1, wherein information on the low load travel, information on the high load travel, and information on the charging point are estimated from map information representing the road.

3. The method for controlling an electric vehicle according to claim 1, wherein information on the charging point is estimated from map information representing the road, and
past information on the low load travel or past information on the high load travel calculated using past map information in which the information on the charging point is the same as in the map information is set to the travel mode.

4. The method for controlling an electric vehicle according to claim 1, wherein information on the low load travel and information on the high load travel are estimated based on the load from a departure location of the vehicle to the charging point.

5. The method for controlling an electric vehicle according to claim 1, wherein information on the charging point is estimated from map information representing the road,
the map information includes information on a predicted vehicle speed on the road facing the charging point, and
past map information having common information on the predicted vehicle speed on the road is extracted, the number of pieces of information on the low load travel and the number of pieces of information on the high load travel included in the past map information are compared, and one having a larger number of pieces of information is set to the travel mode.

6. The method for controlling an electric vehicle according to claim 1, wherein information on the charging point is estimated from map information representing the road,
the map information includes information on a predicted vehicle speed on the road, and
when the predicted vehicle speed on the road is equal to or greater than a predetermined speed, the high load travel is predicted as the travel mode.

7. The method for controlling an electric vehicle according to claim 1, wherein information on the charging point is estimated from map information representing the road,
the map information includes information on a gradient of the road facing the charging point, and
when the road facing the charging point has a predetermined uphill gradient and the road continues for a predetermined distance in the map information, the high load travel is predicted as the travel mode.

8. The method for controlling an electric vehicle according to claim 1, wherein when the vehicle accelerates in a short time after departing from the charging point and travels at a substantially constant speed,
information on the low load travel includes information on a low acceleration start indicating that the vehicle starts from the charging point at a low speed at a start of travel,
information on the high load travel includes information on sudden acceleration start indicating that the vehicle starts from the charging point at a sudden acceleration at the start of the travel,
either the low acceleration start or the sudden acceleration start is selected as the travel mode,
when the travel mode is predicted to be the sudden acceleration start, the upper limit temperature of the battery during charging of the battery is set as the first upper limit temperature, and
when the travel mode is predicted to be the low acceleration start, the upper limit temperature of the battery during charging of the battery is set as the second upper limit temperature.

9. The method for controlling an electric vehicle according to claim 8, wherein information on the charging point is estimated from map information representing the road, and
past information on the low acceleration start or past information on the sudden acceleration start calculated using past map information in which the information on the charging point is the same as in the map information is set to the travel mode.

10. The method for controlling an electric vehicle according to claim 8, wherein the information on the low acceleration start and the information on the sudden acceleration start are estimated based on the load from a departure location of the vehicle to the charging point.

11. The method for controlling an electric vehicle according to claim 8, wherein information on the charging point is estimated from map information representing the road,
the map information includes information on a predicted vehicle speed on the road facing the charging point, and
past map information having common information on the predicted vehicle speed on the road is extracted, the number of pieces of information on the low acceleration start and the number of pieces of information on the sudden acceleration start included in the past map information are compared, and one having a larger number of pieces of information is set to the travel mode.

12. The method for controlling an electric vehicle according to claim 8, wherein information on the charging point is estimated from map information representing the road,
the map information includes information on a predicted vehicle speed on the road, and
when the predicted vehicle speed is equal to or greater than a predetermined speed in the map information, the sudden acceleration start is predicted as the travel mode.

13. A system for controlling an electric vehicle, the electric vehicle including a drive motor,
a battery configured to perform power transfer with the drive motor, and
a control unit configured to limit charge/discharge power of the battery when a temperature of the battery exceeds a predetermined first upper limit temperature, wherein
the control unit is configured to
predict, from information on a road facing a charging point for charging the battery, that the vehicle travels from the charging point in which travel mode of low load travel in which the vehicle travels with a low load on the battery and high load travel in which the vehicle travels with a high load that is greater than the low load,
when the travel mode is predicted to be the high load travel, set an upper limit temperature of the battery during charging of the battery as the first upper limit temperature, and
when the travel mode is predicted to be the low load travel, set the upper limit temperature of the battery during charging of the battery as a second upper limit temperature that is higher than the first upper limit temperature and lower than a heat resistance temperature of the battery.
